(19) Europäisches Patentamt
European Patent Office
Office européen des brevets

(11) **EP 4 629 164 A1**

(12) **EUROPEAN PATENT APPLICATION**
published in accordance with Art. 153(4) EPC

(43) Date of publication:
**08.10.2025 Bulletin 2025/41**

(21) Application number: **23917903.9**

(22) Date of filing: **18.12.2023**

(51) International Patent Classification (IPC):
**G06T 3/40** (2024.01)     **G06T 5/20** (2006.01)
**G06N 3/04** (2023.01)     **G06N 3/08** (2023.01)

(52) Cooperative Patent Classification (CPC):
**G06T 3/4046; G06N 3/04; G06N 3/08; G06T 3/40;
G06T 5/20;** G06T 2207/20084

(86) International application number:
**PCT/KR2023/020873**

(87) International publication number:
**WO 2024/154951 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.01.2023 KR 20230008311**

(71) Applicant: **Samsung Electronics Co., Ltd.
Suwon-si, Gyeonggi-do 16677 (KR)**

(72) Inventor: **LEE, Cheon
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE AND CONTROL METHOD THEREFOR**

(57)     An electronic device and a control method therefor are provided. The electronic device of the present disclosure comprises: a memory storing at least one instruction; and at least one processor that is connected to the memory and controls the electronic device. When an image of first quality is input, the at least one processor analyzes the input image to obtain parameter information about the image, detects, from the input image, an object included in the input image, inputs, into a trained neural network model, the input image, the parameter information about the image, and information about the detected object, so as to obtain an image of second quality, which is higher than the first quality, and outputs the obtained image of second quality.

FIG. 2

**Description**

[Technical Field]

The present disclosure relates to an electronic device and a control method therefor, and more particularly, to an electronic device for improving an input-image quality by using a trained neural network model and a control method therefor.

[Background Art]

In recent years, various learning-based image processing algorithms using neural network models have been developed. A deep learning-based image processing network learning method using learning data in the form of coupled input and output has been able to solve various problems that traditional methods have not addressed. In particular, super resolution (hereinafter referred to as SR), which refers to a technology for improving image sharpness while converting a low-resolution image into a high-resolution image, is being studied extensively.

The SR technology implemented in an electronic device, such as a television (TV), may implement an optimal neural network model in a system on chip (SoC) by considering cost and performance. If a low-resolution image is input as an input image to an SR neural network model, the neural network model may convert the low-resolution image into a high-resolution image. Here, the neural network model may use a fixed value as a weight value or a parameter value, or be designed to have a structure that allows the weight to change variably. A set of weight values of all neural network models is referred to as a weight set or a parameter set. Here, the electronic device may classify an input image type by using various processing units (central processing unit (CPU) and a neural processing unit (NPU)) and apply one of the parameter sets previously learned and stored to the neural network model based on image type information. If the image is processed in this way, different resolution compensation and image improvement results of the input image may be output depending on scene characteristics.

Post-filtering refers to a method that is often used to additionally adjust an output image from a network rather than using such an output image as it is. The output image from the neural network model may need adjustment in its sharpness degree improvement, although the imagep has already been converted into the high-resolution image. To this end, a post-filtering process may be performed, which applies high-frequency/mid-frequency/low-frequency filters to the input image, respectively, to thus separate and adjust a signal, thereby outputting a final output signal.

However, the conventional SR technology is incapable of reflecting all the characteristics of the input image although conventional SR technology may obtain the high-resolution image. For example, the input image may be produced in various environments, and have various characteristics caused by resolution conversion, application of various compression technologies, editing, or the like. However, the conventional SR technology fails to reflect the characteristics of the input image. In addition, the conventional SR technology is incapable of either segmenting the input image into object units or applying a post-filtering operation for the image improvement to the object units.

[Disclosure of Invention]

[Solution to Problem]

According to an embodiment of the present disclosure, provided is an electronic device including: a memory storing at least one instruction; and at least one processor connected to the memory and configured to control the electronic device. The at least one processor may be configured to obtain image parameter information by analyzing an input image if the first-quality image is input into the electronic device. The at least one processor may be configured to detect an object included in the input image from the input image. The at least one processor may be configured to obtain a second-quality image having a higher image quality than a first-image quality by inputting the input image, the image parameter information, and detected-object information into a trained neural network model. The at least one processor may be configured to output the obtained second-quality image.

According to an embodiment of the present disclosure, provided is control method for an electronic method, the method including: obtaining image parameter information by analyzing an input image if the first-quality image is input into the electronic device; detecting an object included in the input image from the input image; obtaining a second-quality image having a higher image quality than a first-image quality by inputting the input image, the image parameter information, and detected-object information into a trained neural network model; and outputting the obtained second-quality image.

According to an embodiment of the present disclosure, provided is a computer-readable recording medium storing a program for executing a control method for an electronic device, wherein the method includes obtaining image parameter information by analyzing an input image if the first-quality image is input into the electronic device, detecting an object included in the input image from the input image, obtaining a second-quality image having a higher image quality than a first-image quality by inputting the input image, the image parameter information, and detected-object information into a trained neural network model, and outputting the obtained second-quality image.

[Brief Description of Drawings]

FIG. 1 is a block diagram showing a configuration of an electronic device according to an embodiment of the present disclosure;
FIG. 2 is a block diagram showing a configuration for improving an input image quality according to an embodiment of the present disclosure;
FIG. 3 is a block diagram showing a configuration included in an image extension module according to an embodiment of the present disclosure;
FIG. 4 is a block diagram showing a configuration included in an object map generation module according to an embodiment of the present disclosure;
FIG. 5 is a block diagram showing a configuration included in an object map generation module according to another embodiment of the present disclosure;
FIG. 6 is a block diagram showing a configuration included in the image extension module according to another embodiment of the present disclosure;
FIG. 7 is a diagram showing a post-filtering operation performed on output data according to another embodiment of the present disclosure;
FIG. 8 is a diagram showing a configuration included in a post-filtering module according to an embodiment of the present disclosure; and
FIG. 9 is a flowchart showing a control method for an electronic device for improving an input image quality according to an embodiment of the present disclosure.

[Mode for the Invention]

Hereinafter, various embodiments of the present disclosure are described with reference to the accompanying drawings. However, it should be understood that technologies mentioned in the present disclosure are not limited to specific embodiments, and include all modifications, equivalents, and alternatives according to the embodiments of the present disclosure.
In the present disclosure, an expression "have", "may have", "include", "may include", or the like, indicates existence of a corresponding feature (for example, a numerical value, a function, an operation, a component such as a part, or the like), and does not exclude existence of an additional feature.
In the present disclosure, an expression "A or B", "at least one of A and/or B", "one or more of A and/or B", or the like, may include all possible combinations of items enumerated together. For example, "A or B", "at least one of A and B" or "at least one of A or B" may indicate all of 1) a case where at least one A is included, 2) a case where at least one B is included, or 3) a case where both of at least one A and at least one B are included.
Expressions "first", "second", or the like, used in the present disclosure may indicate various components regardless of a sequence and/or importance of the components, will be used only in order to distinguish one component from the other components, and do not limit the corresponding components. For example, a first user device and a second user device may indicate different user devices, regardless of a sequence or importance thereof. For example, a "first" component may be named a "second" component and the "second" component may also be similarly named the "first" component, without departing from the scope of the present disclosure.
A term such as a "module", "unit", "part" or the like used in the present disclosure is used to refer to a component which performs at least one function or operation. This component may be implemented by hardware or software or implemented by a combination of hardware and software. In addition, the plurality of "modules", "units", "parts" or the like may be integrated in at least one module or chip and be implemented by a processor except for each of the plurality of "modules", "units", "parts" or the like which needs to be implemented by a specific hardware.
In case that any component (for example, a first component) is mentioned to be (operatively or communicatively) coupled with/to or connected to another component (for example, a second component), it should be understood that the any component is directly coupled to the another component or may be coupled to the another component through other component (for example, a third component). On the other hand, if any component (for example, the first component) is mentioned to be "directly coupled with/to" or "directly connected to" another component (for example, the second component), it should be understood that yet another component (for example, the third component) is not present between any component and another component.

An expression "configured (or set) to" used in the present disclosure may be replaced by an expression "suitable for", "having the capacity to", "designed to", "adapted to", "made to" or "capable of" based on a context. The expression "configured (or set) to" may not necessarily indicate "specifically designed to" in hardware. Instead, an expression a "device configured to" in any context may indicate that the device may "perform~" together with another device or component. For example, a "processor configured (or set) to perform A, B, and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

Terms used in the present disclosure are used only to describe the specific embodiments rather than limit the scope of another embodiment. A term of a singular number may include its plural number unless explicitly indicated otherwise in the context. Terms used in the present disclosure including technical and scientific terms have the same meanings as those that are generally understood by those skilled in the art to which the present disclosure pertains. Terms generally used and defined in a dictionary among terms used in the present disclosure should be interpreted as having meanings that are the same as or similar to meanings within a context of the related art, and should not be interpreted as having ideal or excessively formal meanings unless clearly indicated in the present specification. In some cases, terms may not be interpreted to exclude the embodiments of the present disclosure even though they are defined in the present disclosure.

Hereinafter, the present disclosure will be described in detail with reference to the accompanying drawings. However, in describing the present disclosure, omitted is a detailed description of a case where it is decided that a detailed description of the known functions or configurations related to the present disclosure may unnecessarily obscure the gist of the present disclosure. Throughout the accompanying drawings, similar components are denoted by similar reference numerals.

Hereinafter, the embodiments of the present disclosure are described in detail with reference to the accompanying drawings.

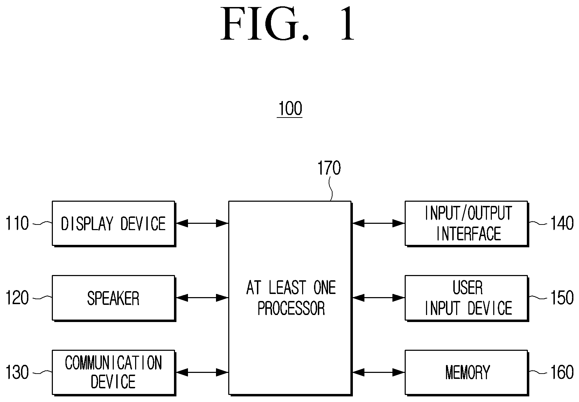

FIG. 1 is a block diagram showing a configuration of an electronic device according to an embodiment of the present disclosure. As shown in FIG. 1, an electronic device 100 may include a display device 110, a speaker 120, a communication device 130, an input/output interface 140, a user input device 150, a memory 160, and at least one processor 170. Meanwhile, the electronic device 100 shown in FIG. 1 may be a display device such as a smart television (TV), which is only an embodiment, may be a user terminal such as a smartphone, a tablet personal computer (PC), or a laptop PC, and may be implemented as a server or the like. In addition, the configuration of the electronic device 100 shown in FIG. 1 is only an embodiment, and some configurations may be added or deleted depending on a type of the electronic device 100.

The display device 110 may output various information. In particular, the display device 110 may output content provided from various sources. For example, the display device 110 may output broadcast content received from an external source, may output game content received through a game server, and may output the broadcast content or the game content received from an external device (e.g., a set-top box or a game console) connected thereto through the input/output interface 140.

In addition, if the first-quality image is input thereinto, the display device 110 may output a second-quality image obtained by inputting a first-quality image into a trained neural network model. Here, a second-image quality may be higher than a first-image quality.

Meanwhile, the display device 110 may be implemented as a liquid crystal display (LCD), or an organic light-emitting diode (OLED) display, or the like, and the display device 110 may also be implemented as a flexible display, a transparent display, or the like, in some cases. However, the display device 110 according to the present disclosure is not limited to a specific type.

The speaker 120 may output various voice messages and audio. In particular, the speaker 120 may output audio of various contents. Here, the speaker 120 may be disposed inside the electronic device 100, which is only an embodiment, and may be disposed outside the electronic device 100 and electrically connected to the electronic device 100.

The communication device 130 may include at least one circuit and communicate with various types of external devices or servers. The communication device 130 may include at least one of a Bluetooth low energy (BLE) module, a wireless fidelity (Wi-Fi) communication module, a cellular communication module, a third generation (3G) mobile communication module, a fourth generation (4G) mobile communication module, a fourth generation long term evolution (LTE) communication module, or a fifth generation (5G) mobile communication module.

In particular, the communication device 130 may receive image content including a plurality of image frames from the external server. Here, the communication device 130 may receive the plurality of image frames in real time from the external server and output the same through the display device 110, which is only an embodiment, and the communication device 130 may receive all of the plurality of image frames from the external server and then output the same through the display device 110.

The input/output interface 140 is a component for inputting/outputting at least one of an audio signal or an image signal. As an example, the input/output interface 140 may be a high definition multimedia interface (HDMI), which is only an embodiment, and may be any one of a mobile high-definition link (MHL), a universal serial bus (USB), a display port (DP), a Thunderbolt port, a video graphics array (VGA) port, a red-green-blue (RGB) port, a D-subminiature (D-SUB) port, or a digital visual interface (DVI) port. According to an implementation example, the input/output interface 140 may include a port for inputting and outputting only the audio signal and a port for inputting and outputting only the image signal as separate ports, or may be implemented as a single port for inputting and outputting both the audio signal and the image signal.

In particular, the electronic device 100 may receive the image content including the plurality of image frames from the external device through the input/output interface 140.

The user input device 150 may include a circuit, and at least one processor 170 may receive a user command to control an operation of the electronic device 100 through the user input device 150. In detail, the user input device 150 may be implemented as a remote control, which is only an embodiment, and may be implemented as a component such as a touchscreen, a button, a keyboard, or a mouse.

In addition, the user input device 150 may include a microphone capable of receiving a user voice. Here, if the user input device 150 is implemented as the microphone, the microphone may be disposed inside the electronic device 100. However, this configuration is only an embodiment, and the user voice may be received through a remote control for controlling the electronic device 100 or a portable terminal (e.g., a smartphone or an artificial intelligence (AI) speaker) including a remote control application for controlling the electronic device 100 installed therein. Here, the remote control or the portable terminal may transmit user voice information to the electronic device 100 through Wi-Fi, Bluetooth, infrared communication, or the like. Here, the electronic device 100 may include the plurality of communication devices for communicating with the remote control or the portable terminal.

In particular, the user input device 150 may receive a user command or the like for operation in a super resolution (SR) mode to improve an input-image quality.

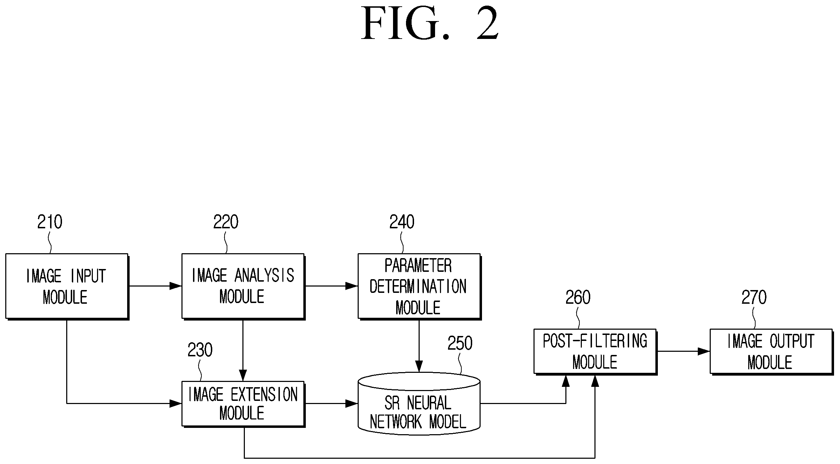

The memory 160 may store an operating system (OS) for controlling overall operations of the components included in the electronic device 100 and instructions or data related to the components of the electronic device 100. In particular, as shown in FIG. 2, the memory 160 may include an image input module 210, an image analysis module 220, an image extension module 230, a parameter determination module 240, a post-filtering module 260, and an image output module 270 to improve the input-image quality. In particular, if a function for improving the input-image quality (i.e., SR mode) is executed, the electronic device 100 may load data enabling various modules for improving the input-image quality stored in a non-volatile memory to perform various operations into a volatile memory. Here, loading indicates an operation of loading and storing the data stored in the non-volatile memory into the volatile memory to enable access of a processor 111 thereto.

In addition, the memory 160 may store information on a neural network model for improving the input-image quality, a neural network model for detecting a type of an input image or a type of an object included in the input image.

In addition, the memory 160 may include a buffer for temporarily storing an input-image frame.

Meanwhile, the memory 160 may be implemented as the non-volatile memory (e.g., a hard disk, a solid state drive (SSD), or a flash memory), the volatile memory (also including an internal memory of at least one processor 170) or the like.

At least one processor 170 may control the electronic device 100 based on at least one instruction stored in the memory 160.

In particular, at least one processor 170 may include at least one processor. In detail, at least one processor may include one or more of a central processing unit (CPU), a graphic processing unit (GPU), an accelerated processing unit (APU), a many integrated core (MIC), a digital signal processor (DSP), a neural processing unit (NPU), a hardware accelerator, or a machine learning accelerator. At least one processor may control one or any combination of other components included in the electronic device, and may perform operations related to communication or data processing. At least one processor may execute at least one program or instruction stored in the memory. For example, at least one processor may perform a method according to an embodiment of the present disclosure by executing at least one instruction stored in the memory.

If the method according to an embodiment of the present disclosure includes a plurality of operations, the plurality of operations may be performed by one processor, or may be performed by a plurality of processors. That is, if a first operation, a second operation, and a third operation are performed by the method according to an embodiment, the first operation, the second operation, and the third operation may all be performed by a first processor, or the first operation and the second operation may be performed by the first processor (e.g., the generic-purpose processor) and the third operation may be performed by a second processor (e.g., an artificial intelligence-specific processor). For example, according to an embodiment of the present disclosure, an operation for detecting the image type or the object type by using a neural network model or an operation for improving the image quality may be performed by a processor that performs parallel operations, such as the GPU or the NPU, and an operation for determining a parameter of the neural network model based on the image type, a preprocessing operation or post-filtering operation on the input image may be performed by the generic-purpose processor such as the CPU.

At least one processor may be implemented as a single-core processor including a single core, or as at least one multi-core processor including multi-cores (e.g., homogeneous multi-cores or heterogeneous multi-cores). If at least one processor is implemented as the multi-core processor, each of the multi-cores included in the multi-core processor may include an internal memory of the processor, such as a cache memory or an on-chip memory, and a common cache shared by the multi-cores may be included in the multi-core processor. In addition, each of the multi-cores (or some of the multi-cores) included in the multi-core processor may independently read and perform a program instruction for implementing the method according to an embodiment of the present disclosure, or all (or some) of the multi-cores may be linked to read and perform the program instruction for implementing the method according to an embodiment of the present disclosure.

If the method according to an embodiment of the present disclosure includes a plurality of operations, the plurality of operations may be performed by the single core among the multi-cores included in the multi-core processor, or may be performed by the multi-cores. For example, if the first operation, the second operation, and the third operation are performed using the method according to an embodiment, the first operation, the second operation, and the third operation may all be performed by a first core included in the multi-core processor, or the first operation and the second operation may be performed by the first core included in the multi-core processor and the third operation may be performed by a second core included in the multi-core processor.

In an embodiment of the present disclosure, the processor may indicate a system on a chip (SoC) integrating at least one processor and other electronic components, the single-core processor, the multi-core processor, or a core included in the single-core processor or the multi-core processor. Here, the core may be implemented as the CPU, the GPU, the APU, the MIC, the DSP, the NPU, the hardware accelerator, or the machine learning accelerator. However, an embodiment of the present disclosure is not limited thereto.

In particular, at least one processor 170 may obtain image parameter information by analyzing the input image if the first-quality image is input thereinto. In addition, at least one processor 170 may detect the object included in the input image from the input image. At least one processor 170 may obtain the second-quality image having a higher image quality than the first-image quality by inputting the input image, the image parameter information, and the detected-object information into the trained neural network model. In addition, at least one processor 170 may output the obtained second-quality image.

In particular, at least one processor 170 may obtain an object map based on the detected-object information. In addition, at least one processor 170 may generate an extended object map by combining the obtained object map with the image parameter information. In addition, at least one processor 170 may obtain the second-quality image by inputting the input image and the extended object map into the trained neural network model.

Here, at least one processor 170 may adjust an object map size if the object map has a lower resolution than the input image. In addition, at least one processor 170 may generate the extended object map by combining the adjusted-size object map with an image parameter.

In addition, at least one processor 170 may obtain input data including (n+m) channels by combining information on the input image including n channels with information on the object map or the extended object map including m channels. At least one processor 170 may obtain the second-quality image by inputting the generated input data into the trained neural network model. Here, n and m may be natural numbers.

At least one processor 170 may process the input image to increase input-image sharpness by using an image sharpening technique.

In addition, at least one processor 170 may obtain the second-quality image by inputting the image having the increased sharpness and the extended object map into the trained neural network model.

Meanwhile, the image parameter information may include at least one of input-image quality information, an input-image production year, a type of camera that captures the input image, input-image average brightness, or an input-image texture detail value. In addition, the detected-object information may include at least one of object position information or object type information.

In addition, at least one processor 170 may obtain the second-quality image by post-filtering output data output from the trained neural network model based on the detected-object information.

At least one processor 170 may obtain a plurality of sub-images by performing multi-band image filtering on the output data output from the neural network model. In addition, at least one processor 170 may obtain a pixel-wise gain value based on the object map obtained from the detected-object information. At least one processor 170 may multiply the plurality of sub-images by the pixel-wise gain value. At least one processor 170 may obtain the second-quality image by adding the plurality of sub-images multiplied by the pixel-wise gain value.

FIG. 2 is a block diagram showing a configuration for improving the input image quality according to an embodiment of the present disclosure. As shown in FIG. 2, the electronic device 100 may include the image input module 210, the image analysis module 220, the image extension module 230, the parameter determination module 240, an SR neural network model 250, the post-filtering module 260, and the image output module 270.

The image input module 210 may receive a signal corresponding to the image from various sources. For example, the image input module 210 may receive the image content from the external source through the communication device 130, receive the image content from the external device through the input/output interface 140, and receive the image content stored in the memory 160. Here, the image may be a general image, which is only an embodiment, and may be any of various images such as a virtual reality (VR) image or a panoramic image.

In particular, the image input module 210 may receive the first-quality image. Here, the first-quality image may be the low-resolution image.

The image analysis module 220 may obtain image information by analyzing the input image. In particular, the image analysis module 220 may input the input image into the trained neural network model to obtain input-image type information.

In addition, the image analysis module 220 may obtain the image parameter information by analyzing input-image characteristics. In detail, the image analysis module 220 may obtain the image parameter information by analyzing a pixel included in the image or using metadata included in the image content. Here, the image parameter information may include at least one of the input-image quality information, the input-image production year, the type of camera that captures the input image, the input-image average brightness, or the input-image texture detail value.

Here, the output image parameter information may include a constant value for each type, as shown in Equation 1 below, and the constant values may be grouped to form a single parameter set.

【Equation 1】

$$Description\_params = \{quality, year, camera, average\ brightness, detail\ amount\}$$

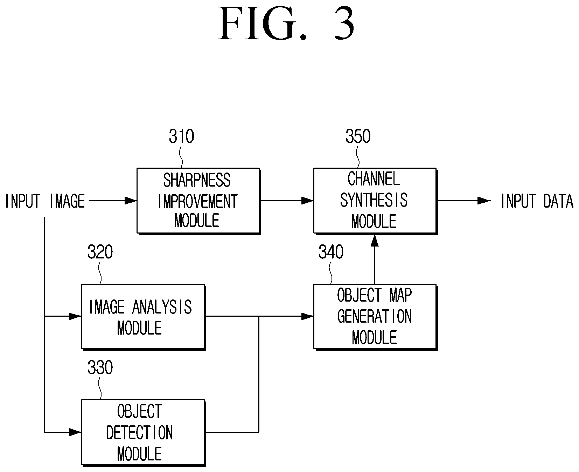

The image extension module 230 may obtain the input data to be input into the SR neural network model 250 based on at least one of the input image, the image parameter information, or the object information. The image extension module 230 is described in more detail with reference to FIGS. 3 to 7.

FIG. 3 is a block diagram showing a configuration included in the image extension module according to an embodiment of the present disclosure. As shown in FIG. 3, the image extension module 230 may include a sharpness improvement module 310, an image analysis module 320, an object detection module 330, an object map generation module 340, and a channel synthesis module 350.

The sharpness improvement module 310 may process the input image to increase the input-image sharpness by using the image sharpening technique. Here, the image sharpening technique may use various methods such as an unsharp masking technique and a multi-band filtering technique. That is, the electronic device 100 may improve the input-image sharpness by using the sharpness improvement module 310 before inputting the image into the SR neural network model 250, and obtain a high-quality image having improved resolution and sharpness by inputting the input image having improved sharpness into the SR neural network model 250.

The image analysis module 320 may obtain the image parameter information by analyzing the input-image characteristics. In detail, the image analysis module 220 may obtain the image parameter information by analyzing the pixel included in the image or by using the metadata included in the image content. Here, the image parameter information may include at least one of the input-image quality information, the input-image production year, the type of camera that captures the input image, the input-image average brightness, or the input-image texture detail value. Here, the image analysis module 320 may be implemented separately from the image analysis module 220 shown in FIG. 2, which is only an embodiment, and the image extension module 230 may not include the image analysis module 320 and may obtain the parameter information output from the image analysis module 220.

The object detection module 330 may obtain the object information by detecting the object included in the input image. In detail, the object detection module 330 may obtain the object type information by inputting the input image into the neural network model capable of identifying the object type. In addition, the object detection module 330 may extract an object boundary by using image segmentation or the neural network model, and obtain the object position information based on the extracted boundary.

Here, the object detection module 330 may obtain the object information as shown in Equation 2 below.

【Equation 2】

$$Object\_info = (BBox, Class\}$$

Here, BBox indicates a bounding box, and may represent position information of a rectangle that indicates the object position. Here, BBox may be represented as {a position of the rectangle center, a rectangle size}, or {a position of an upper left vertex, a position of a lower right vertex}. In addition, Class indicates the object type information.

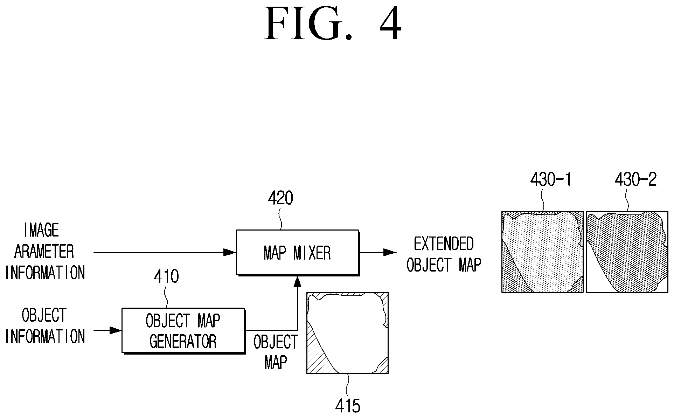

The object map generation module 340 may generate the object map (or the extended object map) based on the image parameter information obtained from the image analysis module 320 and the object information obtained from the object detection module 330. In detail, as shown in FIG. 4, the object map generation module 340 may include an object map generator 410 and a map mixer 420.

The object map generator 410 may generate an object map 415 based on the object information. In particular, the object map generator 410 may generate the object map 415 based on information on the BBox included in Equation 2. Here, the BBox only indicates the rectangle position, which may cause difficulty in generating the object map that matches an object shape. Accordingly, the object map generator 410 may generate the object map 415 by creating a rectangle where the object is disposed as a map and blurring its boundary. Alternatively, the object map generator 410 may generate the object map 415 by referencing the input image to generate a high-performance object map.

The map mixer 420 may generate at least one extended object map by combining the object map 415 obtained from the object map generator 410 with the image parameter information. That is, the map mixer 420 may generate at least one extended object map by reflecting the image parameter to the object map 415.

As an example, the map mixer 420 may generate a first extended object map 430-1 by processing the object map to have a bright value in a high-quality region and a dark value in a low-quality region. As another example, the map mixer 420 may generate a second extended object map 430-2 by processing the object map to have a dark value in a region having high texture detail and a bright value in a region having low texture detail.

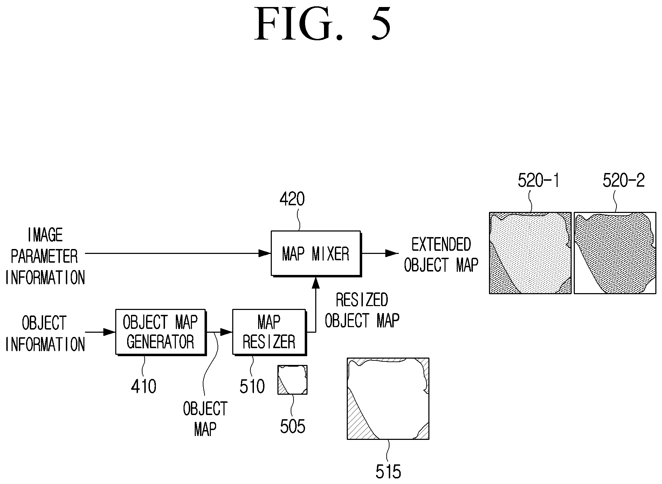

However, as described with reference to FIG. 4, complex hardware may be required if the object map generator 410 generates the object map having the same resolution as the input image. To address this issue, as shown in FIG. 5, the object map generator 410 may generate an object map 505 having a lower resolution than the input image. In addition, a map resizer 510 may obtain a resized object map 515 by enlarging a map size using a bilinear interpolation method having a small amount of calculation. That is, if the object map 505 has the lower resolution than the input image, the map resizer 510 may obtain the resized object map 515 by adjusting a size of the object map 505. In addition, the map mixer 420 may generate at least one extended object map 520-1 or 520-2 by combining the resized object map 505 with the image parameter.

Referring back to FIG. 3, the channel synthesis module 350 may obtain the input data by using the input image having improved sharpness and the object map (or the extended object map) . In detail, if information on the input image (having improved sharpness) including n channels and information on the object map including m channels are obtained, the channel synthesis module 350 may obtain input data including (n+m) channels by combining the information on the input image with information on the object map and the extended object map.

For example, the information on the input image may include three channels including a red (R) channel, a green (G) channel, and a blue (B) channel. In addition, the object map and two extended object maps may include three channels. Here, the channel synthesis module 350 may obtain the input data including six channels by combining the information on the input image including three channels with information on the object and the two extended object maps including three channels.

Meanwhile, the image extension module 230 described with reference to FIGS. 3 to 5 is only an embodiment, and the image extension module 230 may be implemented using another method.

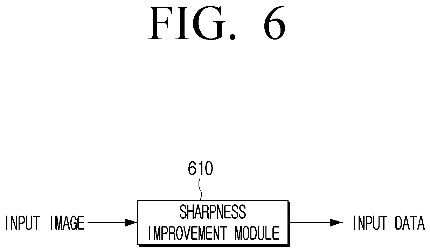

FIG. 6 is a block diagram showing a configuration included in the image extension module according to another embodiment of the present disclosure. As shown in FIG. 6, the image extension module 230 may include a sharpness improvement module 610.

Here, the sharpness improvement module 610 may obtain the input data by processing the input image to increase the input-image sharpness using the image sharpening technique. Here, the image sharpening technique may use the various methods such as the unsharp masking technique and the multi-band filtering technique.

Here, the input data may include three channels including the R, G, and B channels of the image having improved sharpness.

As shown in FIG. 6, the output image having improved sharpness and resolution may be obtained by improving the input-image sharpness and inputting the same into the SR neural network model 250.

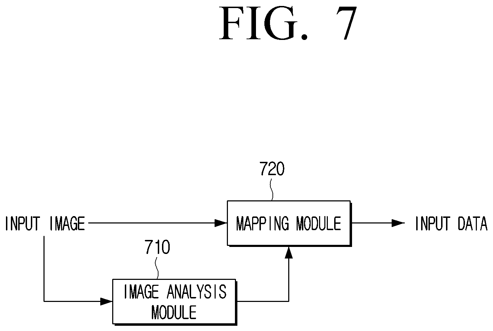

FIG. 7 is a block diagram showing a configuration included in the image extension module according to an embodiment of the present disclosure. As shown in FIG. 7, the image extension module 230 may include an image analysis module 710 and a mapping module 720.

The image analysis module 710 may obtain the image parameter information by analyzing the input image characteristics. In detail, the image analysis module 710 may obtain the image parameter information by analyzing the pixel included in the image or using the metadata included in the image content. Here, the image parameter information may include at least one of the input image quality information, the input image production year, the type of camera that captures the input image, the input image average brightness, or the input image texture detail value. As an example, the image analysis module 710 may obtain the parameter set as shown in Equation 1.

The mapping module 720 may obtain the input data by combining the input image with the image parameter information. Here, the mapping module 720 may generate an image value in one channel to enable the image parameter to have the same size as a channel size of the input image. For example, as shown in Equation 1, if the image parameter information includes five parameters, the mapping module 720 may obtain the image value including five channels as the image parameter information. Therefore, the mapping module 720 may obtain the input data including eight channels by combining the information on the input image including three channels with the image parameter information including five channels.

As shown in FIG. 7, the input-image characteristics may be input into the SR neural network model 250 to thus reflect the input-image characteristics, thereby obtaining the output image having even better quality.

Referring back to FIG. 2, the parameter determination module 240 may determine a parameter of the SR neural network model 250 based on the image type. In detail, if the image type is a first type, the parameter determination module 240 may determine the SR neural network model 250 to have a first parameter set. If the image type is a second type, the parameter determination module 240 may determine the SR neural network model 250 to have a second parameter set.

If the input data is input from the image extension module 230, the SR neural network model 250 may obtain the output data by using the parameter determined by the parameter determination module 240. Here, the SR neural network model 250 refers to the trained neural network model to improve the input-image quality and may be implemented as any of various types of neural network models. As an example, the SR neural network model 250 may be implemented as at least one of a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network, or a transformer.

Here, the output data output from the SR neural network model 250 may be the second-quality image. Here, the second-quality image may be the high-resolution image.

The post-filtering module 260 may obtain the second-quality image by post-filtering the output data. In particular, the post-filtering module 260 may obtain the second-quality image by post-filtering the output data output from the SR neural network model 250 based on the information on the object detected by the image extension module 230.

In detail, the post-filtering module 260 may obtain the plurality of sub-images by performing the multi-band image filtering on the output data output from the SR neural network model 250. In addition, the post-filtering module 260 may obtain the pixel-wise gain value based on the object map. The post-filtering module 260 may multiply the plurality of sub-images by the pixel-wise gain value, and obtain the second-quality image by adding the plurality of sub-images multiplied by the pixel-wise gain value.

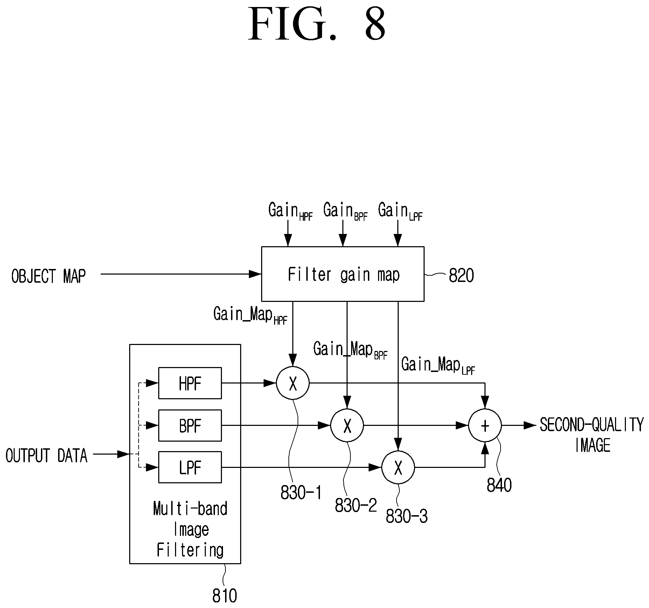

This configuration is described in more detail with reference to FIG. 8. FIG. 8 is a diagram for describing the post-filtering operation on the output data according to an embodiment of the present disclosure.

The post-filtering module 260 may perform multi-band image filtering 810 on the output data. In detail, as shown in FIG. 8, the post-filtering module 260 may obtain three sub-images by using a low-pass filter (LPF), a band-pass filter (BPF), and a high-pass filter (HPF). Here, the three sub-images $IMG_{LPF}$, $IMG_{BPF}$, and $IMG_{HPF}$ may be expressed as shown in Equation 3 below.

$$【Equation\ 3】$$

$$IMG_{LPF} = F_{LPF}\ (IMG)$$
$$IMG_{BPF} = F_{BPF}\ (IMG)$$
$$IMG_{HPF} = F_{HPF}\ (IMG)$$

Here, IMG indicates the output data.

In addition, if results of the respective band filters are added together, a result thereof may be the same as output data IMG, as shown in Equation 4 below.

$$【Equation\ 4】$$

$$IMG_{LPF} + IMG_{BPF} + IMG_{HPF} = IMG$$

In addition, the post-filtering module 260 may generate a filter gain map 820 based on the object map output from the image extension module 230. That is, the post-filtering module 260 may obtain the filter gain map 820 including the pixel-wise gain value to be multiplied by the plurality of sub-images based on the object map.

In detail, the post-filtering module 260 may obtain pixel-wise gain values $Gain'_{LPF}$, $Gain'_{BPF}$, and $Gain'_{HPF}$ to be multiplied by the plurality of sub-images by multiplying the object map by band-specific gain values $Gain_{LPF}$, $Gain_{BPF}$, and $Gain_{HPF}$, as shown in Equation 5 below.

【Equation 5】

$$Gain'_{LPF} = Obj\_Map \times Gain_{LPF}$$
$$Gain'_{BPF} = Obj\_Map \times Gain_{BPF}$$
$$Gain'_{HPF} = Obj\_Map \times Gain_{HPF}$$

Here, Obj_map indicates pixel information of the object map, which may be a value between zero and 1.

In addition, the post-filtering module 270 may obtain a plurality of improved sub-images IMG"$_{LPF}$, IMG"$_{BPF}$, and IMG"$_{HPF}$ by multiplying the plurality of sub-images by the pixel-wise gain value by using a plurality of multiplication operators 830-1, 830-2, and 830-3, as shown in Equation 6 below.

【Equation 6】

$$IMG"_{LPF} = IMG_{LPF} \times Gain'_{LPF}$$
$$IMG"_{BPF} = IMG_{BPF} \times Gain'_{BPF}$$
$$IMG"_{HPF} = IMG_{HPF} \times Gain'_{HPF}$$

In addition, the post-filtering module 270 may obtain a second-quality image IMG"$_{out}$ by adding the plurality of sub-images (the improved sub-images) multiplied by the pixel-wise gain value by using an addition operator 840, as shown in Equation 7 below.

【Equation 7】

$$IMG"_{LPF} + IMG"_{BPF} + IMG"_{HPF} = IMG"_{out}$$

As described above, the post-filtering may be performed adaptively for each object by performing the post-filtering using the object map, and accordingly, the output image may be post-filtered to appear more natural and the object may appear sharp.

Referring back to FIG. 2, the image output module 270 may output the second-quality image. Here, the image output module 270 may output the second-quality image through the display device 110, which is only an embodiment, and may also output the second-quality image to the external device through the communication device 130 or the input/output interface 140.

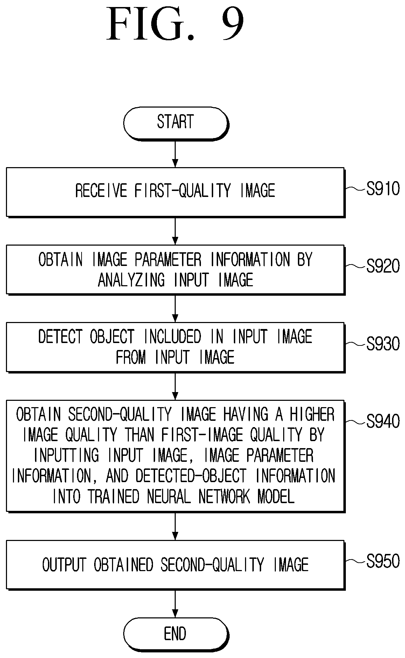

FIG. 9 is a flowchart showing a control method for an electronic device for improving an input image quality according to an embodiment of the present disclosure.

First, the electronic device 100 may receive the first-quality image (S910). Here, the first-quality image may be the low-resolution image.

The electronic device 100 may obtain the image parameter information by analyzing the input image (S920). Here, the image parameter information may include at least one of the input-image quality information, the input-image production year, the type of camera that captures the input image, the input-image average brightness, or the input-image texture detail value.

The electronic device 100 may detect the object included in the input image from the input image (S930). In addition, the electronic device 100 may obtain the detected-object information. Here, the object information may include at least one of the object position information or the object type information.

The electronic device 100 may obtain the second-quality image having a higher image quality than the first-image quality by inputting the input image, the image parameter information, and the detected-object information into the trained neural network model (S940).

In detail, the electronic device 100 may obtain the object map based on the detected-object information. In addition, the electronic device 100 may generate the extended object map by combining the obtained object map with the image parameter information. In addition, the electronic device 100 may obtain the second-quality image by inputting the input image and the extended object map into the trained neural network model.

In addition, if the object map has a lower resolution than the input image, the electronic device 100 may adjust the object map size, and generate the extended object map by combining the adjusted-size object map with the image parameter.

In addition, the electronic device 100 may obtain the input data including (n+m) channels by combining the information on the input image including n channels with the information on the object map or the extended object map including m channels. In addition, the electronic device 100 may obtain the second-quality image by inputting the generated input data into the trained neural network model.

In addition, the electronic device 100 may process the input image to increase the input-image sharpness by using the image sharpening technique. In addition, the electronic device 100 may obtain the second-quality image by inputting the image having increased sharpness and the extended object map into the trained neural network model.

In addition, the electronic device 100 may obtain the second-quality image by post-filtering the output data output from the trained neural network model based on the detected-object information. Here, the electronic device 100 may obtain the plurality of sub-images by performing the multi-band image filtering on the output data output from the neural network model. In addition, the electronic device 100 may obtain the pixel-wise gain value based on the object map obtained from the detected-object information. In addition, the electronic device 100 may obtain the second-quality image by multiplying the plurality of sub-images by the pixel-wise gain value and then adding the plurality of sub-images multiplied by the pixel-wise gain value.

The electronic device 100 may output the obtained second-quality image (S950). Here, the electronic device 100 may output the second-quality image through the display device 110, which is only an embodiment, and may also output the second-quality image to the external device through the communication device 130 or the input/output interface 140.

Meanwhile, according to an embodiment of the present disclosure, at least one processor 170 may perform control to process the input data according to a predefined operation rule or an artificial intelligence model stored in the memory 160. The predefined operation rule or the artificial intelligence model may be created through learning.

Here, being created through learning indicates that the predefined operation rule or the artificial intelligence model having desired characteristics may be created by applying a learning algorithm to a large number of learning data. This learning may be performed by a device itself where the artificial intelligence according to the present disclosure is performed, or may be performed through a separate server/system.

The artificial intelligence model (e.g., the first and second object detection networks) may include a plurality of neural network layers. At least one layer may have at least one weight (weight value/or a weight value) and perform an operation of the layer through/based on an operation result of a previous layer and at least one defined operation. Examples of neural networks may include the convolutional neural network (CNN), the deep neural network (DNN), the recurrent neural network (RNN), the restricted Boltzmann machine (RBM), the deep belief network (DBN), the bidirectional recurrent deep neural network (BRDNN), the deep Q-network, and the transformer, and the neural networks in the present disclosure are not limited to the aforementioned examples unless specified otherwise.

The learning algorithm refers to a method for training a predetermined target device by using the plurality of learning data to enable the predetermined target device to make a determination or prediction on its own. Examples of learning algorithms may include supervised learning, unsupervised learning, semi-supervised learning, or reinforcement learning, and the learning algorithms in the present disclosure are not limited to the aforementioned examples unless specified otherwise.

Meanwhile, the methods according to the various embodiments of the present disclosure may be included and provided in a computer program product. The computer program product may be traded as a commodity between a seller and a purchaser. The computer program product may be distributed in a form of the machine-readable storage medium (for example, a compact disc read only memory (CD-ROM)) or online through an application store (for example, PlayStore™) or directly between two user devices (e.g., smartphones). In case of the online distribution, at least a part of the computer program product (e.g., downloadable app) may be at least temporarily stored or temporarily provided in the machine-readable storage medium such as a server memory of a manufacturer, a server memory of an application store, or a relay server memory.

The various embodiments of the present disclosure may be implemented by software including an instruction stored in the machine-readable storage medium (for example, the computer-readable storage medium). A machine may be an apparatus that invokes the stored instruction from the storage medium, may be operated based on the invoked instruction, and may include the electronic device according to the disclosed embodiments.

Meanwhile, the machine-readable storage medium may be provided in the form of a non-transitory storage medium. Here, the "non-transitory storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored.

In case that the instruction is executed by the processor, the processor may directly perform a function corresponding to the instruction or other components may perform the function corresponding to the instruction under a control of the processor. The instruction may include a code provided or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

**Claims**

1. An electronic device comprising:

   a memory storing at least one instruction; and
   at least one processor connected to the memory and configured to control the electronic device,
   wherein the at least one processor is configured to
   obtain image parameter information by analyzing an input image if the first-quality image is input into the electronic device,
   detect an object included in the input image from the input image,
   obtain a second-quality image having a higher image quality than a first-image quality by inputting the input image, the image parameter information, and detected-object information into a trained neural network model, and
   output the obtained second-quality image.

2. The device as claimed in claim 1, wherein the at least one processor is configured to

   obtain an object map based on the detected-object information,
   generate an extended object map by combining the obtained object map with the image parameter information, and
   obtain the second-quality image by inputting the input image and the extended object map into the trained neural network model.

3. The device as claimed in claim 2, wherein the at least one processor is configured to

   adjust an object map size if the object map has a lower resolution than the input image, and
   generate the extended object map by combining the adjusted-size object map with the image parameter.

4. The device as claimed in claim 2, wherein the at least one processor is configured to

   obtain input data including (n+m) channels by combining information on the input image including n channels with information on the object map or the extended object map including m channels, and
   obtain the second-quality image by inputting the generated input data into the trained neural network model, where n and m are natural numbers.

5. The device as claimed in claim 2, wherein the at least one processor is configured to

   process the input image to increase input-image sharpness by using an image sharpening technique, and
   obtain the second-quality image by inputting the image having the increased sharpness and the extended object map into the trained neural network model.

6. The device as claimed in claim 2, wherein the image parameter information includes at least one of input-image quality information, an input-image production year, a type of camera that captures the input image, input-image average brightness, or an input-image texture detail value.

7. The device as claimed in claim 2, wherein the detected-object information includes at least one of object position information or object type information.

8. The device as claimed in claim 1, wherein the at least one processor is configured to obtain the second-quality image by post-filtering output data output from the trained neural network model based on the detected-object information.

9. The device as claimed in claim 8, wherein the at least one processor is configured to obtain a plurality of sub-images by performing multi-band image filtering on the output data output from the neural network model, and

   obtain a pixel-wise gain value based on the object map obtained from the detected-object information,
   multiplying the plurality of sub-images by the pixel-wise gain value, and
   obtaining the second-quality image by adding the plurality of sub-images multiplied by the pixel-wise gain value.

10. A control method for an electronic device, the method comprising:

obtaining image parameter information by analyzing an input image if the first-quality image is input into the electronic device;

detecting an object included in the input image from the input image;

obtaining a second-quality image having a higher image quality than a first-image quality by inputting the input image, the image parameter information, and detected-object information into a trained neural network model; and

outputting the obtained second-quality image.

11. The method as claimed in claim 10, wherein the obtaining of the second-quality image includes

obtaining an object map based on the detected-object information,

generating an extended object map by combining the obtained object map with the image parameter information, and

obtaining the second-quality image by inputting the input image and the extended object map into the trained neural network model.

12. The method as claimed in claim 11, wherein the generating includes

adjusting an object map size if the object map has a lower resolution than the input image, and

generating the extended object map by combining the adjusted-size object map with the image parameter.

13. The method as claimed in claim 11, wherein the obtaining of the second-quality image includes

obtaining input data including (n+m) channels by combining information on the input image including n channels with information on the object map or the extended object map including m channels, and

obtaining the second-quality image by inputting the generated input data into the trained neural network model, where n and m are natural numbers.

14. The method as claimed in claim 11, further comprising processing the input image to increase input-image sharpness by using an image sharpening technique,

wherein in the obtaining of the second-quality image,

the second-quality image is obtained by inputting the image having the increased sharpness and the extended object map into the trained neural network model.

15. The method as claimed in claim 11, wherein the image parameter information includes at least one of input-image quality information, an input-image production year, a type of camera that captures the input image, input-image average brightness, or an input-image texture detail value.

# FIG. 1

<u>100</u>

# FIG. 2

IMAGE INPUT MODULE (210) → IMAGE ANALYSIS MODULE (220) → PARAMETER DETERMINATION MODULE (240)

IMAGE EXTENSION MODULE (230) → SR NEURAL NETWORK MODEL (250) → POST-FILTERING MODULE (260) → IMAGE OUTPUT MODULE (270)

# FIG. 3

INPUT IMAGE →

310

SHARPNESS IMPROVEMENT MODULE

320

IMAGE ANALYSIS MODULE

330

OBJECT DETECTION MODULE

340

OBJECT MAP GENERATION MODULE

350

CHANNEL SYNTHESIS MODULE

→ INPUT DATA

# FIG. 4

IMAGE
ARAMETER
INFORMATION

OBJECT
INFORMATION

410
OBJECT MAP
GENERATOR

OBJECT
MAP

415

420
MAP MIXER

EXTENDED
OBJECT MAP

430-1    430-2

# FIG. 5

IMAGE PARAMETER INFORMATION

420

MAP MIXER

EXTENDED OBJECT MAP

520-1    520-2

OBJECT INFORMATION

OBJECT MAP GENERATOR

410

OBJECT MAP

MAP RESIZER

510

RESIZED OBJECT MAP

505

515

# FIG. 6

610

INPUT IMAGE → | SHARPNESS IMPROVEMENT MODULE | → INPUT DATA

# FIG. 7

INPUT IMAGE ─────────────────────────────▶ MAPPING MODULE ─────▶ INPUT DATA

720

710

IMAGE ANALYSIS MODULE

# FIG. 8

Gain_HPF  Gain_BPF  Gain_LPF

OBJECT MAP → Filter gain map ~ 820

$Gain\_Map_{HPF}$

$Gain\_Map_{BPF}$

$Gain\_Map_{LPF}$

OUTPUT DATA →

HPF

BPF

LPF

Multi-band
Image
Filtering

810

X → 830-1

X → 830-2

X → 830-3

+ → SECOND-QUALITY IMAGE

840

# FIG. 9

```
                    ┌─────────┐
                    │  START  │
                    └─────────┘
                         │
                         ▼
    ┌──────────────────────────────────────────┐
    │       RECEIVE FIRST-QUALITY IMAGE         │──S910
    └──────────────────────────────────────────┘
                         │
                         ▼
    ┌──────────────────────────────────────────┐
    │  OBTAIN IMAGE PARAMETER INFORMATION BY    │──S920
    │         ANALYZING INPUT IMAGE             │
    └──────────────────────────────────────────┘
                         │
                         ▼
    ┌──────────────────────────────────────────┐
    │   DETECT OBJECT INCLUDED IN INPUT IMAGE   │──S930
    │            FROM INPUT IMAGE               │
    └──────────────────────────────────────────┘
                         │
                         ▼
    ┌──────────────────────────────────────────┐
    │ OBTAIN SECOND-QUALITY IMAGE HAVING A HIGHER│──S940
    │ IMAGE QUALITY THAN FIRST-IMAGE QUALITY BY │
    │    INPUTTING INPUT IMAGE, IMAGE PARAMETER  │
    │ INFORMATION, AND DETECTED-OBJECT INFORMATION│
    │      INTO TRAINED NEURAL NETWORK MODEL     │
    └──────────────────────────────────────────┘
                         │
                         ▼
    ┌──────────────────────────────────────────┐
    │    OUTPUT OBTAINED SECOND-QUALITY IMAGE   │──S950
    └──────────────────────────────────────────┘
                         │
                         ▼
                    ┌─────────┐
                    │   END   │
                    └─────────┘
```

# EP 4 629 164 A1

## INTERNATIONAL SEARCH REPORT

| | International application No. |
|---|---|
| | **PCT/KR2023/020873** |

| **A.** | **CLASSIFICATION OF SUBJECT MATTER** |
|---|---|

**G06T 3/40**(2006.01)i; **G06T 5/20**(2006.01)i; **G06N 3/04**(2006.01)i; **G06N 3/08**(2006.01)i

According to International Patent Classification (IPC) or to both national classification and IPC

| **B.** | **FIELDS SEARCHED** |
|---|---|

Minimum documentation searched (classification system followed by classification symbols)

G06T 3/40(2006.01); G06N 3/04(2006.01); G06N 3/08(2006.01); G06T 1/00(2006.01); H04N 1/387(2006.01); H04N 21/2343(2011.01); H04N 21/435(2011.01); H04N 5/225(2006.01); H04N 9/07(2006.01); H04N 9/09(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 화질(resolution), 파라미터(parameter), 오브젝트(object), 검출(detect), 신경망 모델(neural network model), 맵(map)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | KR 10-2022-0071011 A (SAMSUNG ELECTRONICS CO., LTD.) 31 May 2022 (2022-05-31)<br>See paragraphs [0081], [0121] and [0134]; claims 1, 4 and 6; and figures 2b, 5-6 and 8. | 1,10 |
| Y | | 8 |
| A | | 2-7,9,11-15 |
| Y | JP 2020-025179 A (CANON INC.) 13 February 2020 (2020-02-13)<br>See claim 1. | 8 |
| A | JP 2022-530518 A (SENSETIME GROUP LTD. et al.) 29 June 2022 (2022-06-29)<br>See paragraphs [0004]-[0008]; and claims 1-10. | 1-15 |
| A | KR 10-2021-0061906 A (SAMSUNG ELECTRONICS CO., LTD.) 28 May 2021 (2021-05-28)<br>See paragraphs [0007]-[0026]; and claims 1-11. | 1-15 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **08 March 2024** | **25 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 629 164 A1**

**INTERNATIONAL SEARCH REPORT**

International application No.

**PCT/KR2023/020873**

| C. | DOCUMENTS CONSIDERED TO BE RELEVANT | |
|---|---|---|
| Category* | Citation of document, with indication, where appropriate, of the relevant passages | Relevant to claim No. |
| A | JP 2021-022758 A (SONY CORP.) 18 February 2021 (2021-02-18)<br>See paragraphs [0014]-[0021]; and claims 1-16. | 1-15 |

Form PCT/ISA/210 (second sheet) (July 2022)

24

**INTERNATIONAL SEARCH REPORT**
Information on patent family members

International application No.

**PCT/KR2023/020873**

| Patent document cited in search report | | | Publication date (day/month/year) | Patent family member(s) | | | Publication date (day/month/year) |
|---|---|---|---|---|---|---|---|
| KR | 10-2022-0071011 | A | 31 May 2022 | CN | 116348905 | A | 27 June 2023 |
| | | | | EP | 4002263 | A1 | 25 May 2022 |
| | | | | US | 2022-0164923 | A1 | 26 May 2022 |
| | | | | WO | 2022-108008 | A1 | 27 May 2022 |
| JP | 2020-025179 | A | 13 February 2020 | | None | | |
| JP | 2022-530518 | A | 29 June 2022 | CN | 113841179 | A | 24 December 2021 |
| | | | | JP | 7394147 | B2 | 07 December 2023 |
| | | | | US | 2022-0044054 | A1 | 10 February 2022 |
| | | | | WO | 2020-220807 | A1 | 05 November 2020 |
| KR | 10-2021-0061906 | A | 28 May 2021 | CN | 114731455 | A | 08 July 2022 |
| | | | | EP | 4000272 | A1 | 25 May 2022 |
| | | | | US | 11636626 | B2 | 25 April 2023 |
| | | | | US | 2021-0150287 | A1 | 20 May 2021 |
| | | | | WO | 2021-101243 | A1 | 27 May 2021 |
| JP | 2021-022758 | A | 18 February 2021 | CN | 114145012 | A | 04 March 2022 |
| | | | | JP | 7358817 | B2 | 11 October 2023 |
| | | | | US | 2022-0264060 | A1 | 18 August 2022 |
| | | | | WO | 2021-014764 | A1 | 28 January 2021 |

Form PCT/ISA/210 (patent family annex) (July 2022)